# EUROPÄISCHE PATENTSCHRIFT

(11) **EP 3 308 619 B1**
(45) Veröffentlichungstag und Bekanntmachung des Hinweises auf die Patenterteilung: **14.08.2019**
(21) Anmeldenummer: 17401107.2
(22) Anmeldetag: 05.10.2017
(51) Int. Cl.: A01C 15/00, A01C 17/00, A01C 19/00

(54) **STREUGERÄT ZUM VERTEILEN VON STREUGUT**
SPREADING DEVICE FOR DISTRIBUTION OF SPREAD MATERIAL
APPAREIL D'ÉPANDAGE DESTINÉ À ÉPANDRE LE MATÉRIAU D'ÉPANDAGE

(30) Priorität: 12.10.2016 DE 102016119368
(43) Veröffentlichungstag der Anmeldung: 18.04.2018
(73) Patentinhaber: Amazonen-Werke H. Dreyer GmbH & Co. KG, 49205 Hasbergen (DE)
(72) Erfinder: Stein, Florian, 49080 Osnabrück (DE); Johannaber, Stefan Jan, 49536 Lienen (DE); Kleine-Hartlage, Hubertus, 49186 Bad Iburg (DE)

(56) Entgegenhaltungen:
- EP-A2- 0 138 127
- EP-B1- 1 559 305
- DE-A1- 3 924 334
- DE-A1-102008 024 336

## Beschreibung

Die Erfindung betrifft ein Streugerät zum Verteilen von Streugut gemäß dem Oberbegriff des Patentanspruches 1.

Streugeräte weisen üblicherweise einen Vorratsbehälter für das Streugut auf, innerhalb welchem ein Rührorgan angeordnet ist. Das Rührorgan soll Verstopfungen in dem Bereich der Auslauföffnung des Vorratsbehälters vermeiden, sowie einen geleichmäßigen Ausfluss des Streugutes zu gewährleisten bzw. zu fördern.

Das den Vorratsbehälter durch die Auslauföffnung verlassende Streugut fällt bei gattungsgemäßen Geräten auf eine rotierend angetriebene Streuscheibe, welche das Streugut dann auswirft.

Diesbezüglich offenbart die Druckschrift DE 36 37 045 C2 einen Düngerstreuer, bei welchem die Streuscheibe rotatorisch von einer Antriebseinrichtung angetrieben wird und das Rührwerk ohne einen aktiven Antrieb frei rotierbar gelagert ist.

Andere Ansätze sehen das aktive Antreiben der Streuscheibe und des Rührorgans vor. Die Druckschrift EP 1 559 305 B1 schlägt hierzu einen Zweischeibenstreuer zum Verteilen von Streugut vor, wobei die Wurfscheiben und die Rührwerke von unterschiedlichen Antriebssträngen angetrieben werden.

Zur Reduzierung der Teileanzahl und zur Verringerung der Systemkomplexität ist man dazu übergegangen die Rührorganantriebswelle und die Streuscheibenantriebswelle mittels derselben Antriebseinrichtung anzutreiben.

Aus der Druckschrift DE 35 41 415 A1 ist beispielsweise ein Gerät zum Ausstreuen von pulverigem, körnigem und/oder kleinstückigem Streugut bekannt, deren Antriebswelle zwei unterschiedlich bemessene Kegelantriebsräder aufweist, wobei ein Kegelantriebsrad mit einem die Rührorganantriebswelle antreibenden Kegelabtriebsrad kämmt und ein Kegelantriebsrad mit einem die Streuscheibenantriebswelle antreibenden Kegelabtriebsrad kämmt. Weitere Lösungen, in denen die Rührorganantriebswelle und die Streuscheibenantriebswelle von derselben Antriebseinrichtung angetrieben werden, sind in den Druckschriften EP 1 559 305 B1 und DE 39 24 334 A1 offenbart.

Ferner offenbaren die Druckschriften DE 33 37 813 A1 und DE 28 04 253 A1 weitere Lösungen, bei welchen die Streuscheibenantriebswelle und die Rührorganantriebswelle mittels eines Getriebes miteinander verbunden sind.

Einige bekannte Lösungen, wie die der Druckschrift EP 0 138 127 A2, berücksichtigen bereits, dass zur Erzielung einer optimalen Streugutverteilung und zur Vermeidung einer Streugutbeschädigung die Streuscheibe und das Rührorgan unterschiedliche Drehzahlen und Drehmomente aufweisen müssen. Zur Wandlung der Drehzahl und des Drehmoments zwischen der Streuscheibenantriebswelle und der Rührorganantriebswelle werden üblicherweise Untersetzungsgetriebe eingesetzt.

Die im Stand der Technik verwendeten Getriebearten benötigen jedoch einen großen Bauraum, um die gewünschten Übersetzungsverhältnisse umsetzen zu können. Ferner führt die Momentenübertragung bei den verwendeten Getriebearten zu einer hohen mechanischen Beanspruchung der Getriebekomponenten.

Die der Erfindung zugrunde liegende Aufgabe besteht somit darin, ein Streugerät bereitzustellen, bei welchem die Drehzahl- und Momentenwandlung zwischen der Streuscheibenantriebswelle und der Rührorganantriebswelle platzsparend umgesetzt ist und die verwendete Mechanik einfach und kostengünstig ausgeführt werden kann.

Die Aufgabe wird durch die kennzeichnenden Merkmale des Anspruchs 1 gelöst.

Die Erfindung macht sich die Erkenntnis zunutze, dass Exzentergetriebe äußerst hohe Über- und/oder Untersetzungsverhältnisse bei kompakter Bauform ermöglichen. Die kompakte Bauform des Getriebes erlaubt den Aufgabepunkt des Streuguts nah am Streuscheibenmittelpunkt zu platzieren, wodurch das Streugut bei der Aufnahme durch die Streuscheibe geschont wird. Darüber hinaus lässt sich durch die geringe Baugröße ein Vorratsbehälter mit einer Trichterspitze gestalten, in welcher wenig Reststreugut zurückbleibt. Außerdem werden die Getriebekomponenten bei Exzentergetrieben teilweise erheblich weniger beansprucht als bei Stirnrad- oder Kegelradgetrieben. Durch die verringerte Beanspruchung werden die Lebensdauer und die Ausfallsicherheit erheblich erhöht.

In einer bevorzugten Ausführungsform des erfindungsgemäßen Streugeräts ist das Rührorgan in der Trichterspitze des Vorratsbehälters angeordnet. Vorzugsweise verlaufen die Rührorganantriebswelle und die Streuscheibenantriebswelle jeweils in vertikaler Richtung. Insbesondere wird das Antriebsmoment der Antriebseinrichtung in die Streuscheibenantriebswelle eingeleitet und über das Exzentergetriebe an die Rührorganantriebswelle übertragen. Zwischen der Streuscheibenantriebswelle und dem Exzentergetriebe und/oder zwischen dem Exzentergetriebe und der Rührorganantriebswelle können jeweils ein oder mehrere drehmomentübertragende Zwischenwellen angeordnet sein. Um die Drehzahl der Rührorganantriebswelle gegenüber der Drehzahl der Streuscheibenantriebswelle zu reduzieren, ist es außerdem bevorzugt, dass das Exzentergetriebe als Untersetzungsgetriebe ausgebildet ist. Die Rührorganantriebswelle kann vollständig oder abschnittsweise in einem Gehäuse angeordnet sein, wobei das Rührorgan und der Gehäusedeckel separat oder einstückig, d.h. als integrale Bestandteile eines Bauteils ausgebildet sein können.

Das erfindungsgemäße Streugerät wird ferner dadurch vorteilhaft weitergebildet, dass das Exzentergetriebe als zahnradfreies Getriebe ausgebildet ist. Insbesondere ist ein zahnradfreies Exzentergetriebe bevorzugt, bei welchem eine Kurvenscheibe Verwendung findet. Kurvenscheiben werden, anderes als Zahnräder, nicht durch Scherkräfte beansprucht, sodass die Lebensdauer und die Ausfallsicherheit weiter gesteigert werden.

Im erfindungsgemäßen Streugerät ist das Exzentergetriebe als Zykloidgetriebe ausgebildet. Die Streuscheibenantriebswelle ist als Getriebeeingangswelle und die Rührorganantriebswelle als Getriebeausgangswelle ausgebildet. Die Getriebeeingangswelle weist einen Exzenterabschnitt auf, welcher eine Kurvenscheibe antreibt. Zwischen dem Exzenterabschnitt und der Kurvenscheibe ist vorzugsweise ein Wälzlager angeordnet. Die Kurvenscheibe weist vorzugsweise mehrere Kurvenabschnitte auf, welche sich in einem feststehenden Kurvenring abwälzen. Insbesondere ist die Anzahl der Kurvenabschnitte des Kurvenrings höher als die Anzahl der Kurvenabschnitte der Kurvenscheibe. Vorzugsweise weist der Kurvenring ein, zwei, drei oder vier Kurvenabschnitte mehr als die Kurvenscheibe auf. Die Kurvenscheibe weist vorzugsweise mehrere auf einer Kreisbahn angeordnete Durchgangslöcher auf. Durch die Durchgangslöcher erstreckt sich jeweils ein Stift, wobei die Durchgangslöcher einen größeren Durchmesser als die Stifte aufweisen. Die Stifte sind mit der Getriebeausgangswelle verbunden oder Bestandteil der Welle. Über die Stifte wird die Getriebeausgangswelle durch die Kurvenscheibe angetrieben, wobei die taumelnde Drehbewegung der Kurvenscheibe durch die Anordnung und die Dimensionierung der Durchgangslöcher der Kurvenscheibe und der Stifte in eine gleichförmige Rotationsbewegung der Getriebeausgangswelle umgeformt wird.

In einer weiteren Ausführungsfrom des erfindungsgemäßen Streugeräts sind die Rührorganantriebswelle und die Streuscheibenantriebswelle parallel oder koaxial zueinander angeordnet. Durch die parallele oder koaxiale Anordnung der Rührorganantriebswelle und der Streuscheibenantriebswelle wird die Systemkomplexität reduziert. Insbesondere lässt sich auf diese Weise die Lagerung der Rührorganantriebswelle und der Streuscheibenantriebswelle sowie die Geometrie des Gehäuses, in welchem die Rührorganantriebswelle und/oder die Streuscheibenantriebswelle angeordnet sind, erheblich vereinfachen. Alternativ kann die taumelnde Drehbewegung der Kurvenscheibe des Zykloidgetriebes ohne Umformung in das Rührorgan eingeleitet werden. Die Rühreffektivität des Rührorgans wird durch die taumelnde Drehbewegung nochmals gesteigert.

In einer anderen Ausführungsform des erfindungsgemäßen Streugeräts weisen die Rührorganantriebswelle und die Streuscheibenantriebswelle entgegengesetzte Rotationsrichtungen auf. Durch die entgegengesetzten Rotationsrichtungen der Rührorganantriebswelle und der Streuscheibenantriebswelle lassen sich entgegengesetzte Rotationsrichtungen des Rührorgans und der Streuscheibe umsetzen.

In einer besonders vorteilhaften Weiterbildung des erfindungsgemäßen Streugeräts ist zwischen dem Rührorgan und der Streuscheibenantriebswelle eine Überlastkupplung angeordnet. Auf diese Weise kann vermieden werden, dass eine Blockade der Rührorgans zu einem Stillstand der Streuscheibe führt. Eine Blockade des Rührorgans kann beispielsweise durch Gegenstände hervorgerufen werden, welche unbeabsichtigt in den Vorratsbehälter für das Streugut gelangt sind. Ferner können starke Verklumpungen des Streuguts zu einer Blockade des Rührorgans führen. Außerdem wird das Streugerät durch die Überlastkupplung vor Beschädigungen geschützt, sodass das Ausfallrisiko verringert und die Lebensdauer des Streugeräts erhöht wird. Darüber hinaus wird durch die Überlastkupplung das Verletzungsrisiko für den Maschinenbediener erheblich gesenkt.

Bevorzugt ist ferner ein erfindungsgemäßes Streugerät, bei welchem die Überlastkupplung zwischen dem Rührorgan und der Rührorganantriebswelle angeordnet ist. Somit ist die Überlastkupplung weiterhin zwischen dem Rührorgan und der Streuscheibenantriebswelle angeordnet, dadurch wird in dieser Ausführungsform die Streuscheibenantriebswelle und das Exzentergetriebe vor Überlast und somit vor Beschädigungen geschützt. Es kommt somit zu einer weiteren Absenkung des Risikos einer durch Überlast hervorgerufenen Beschädigung des Streugeräts. Zeit- und kostenaufwändige Reparaturarbeiten an dem Exzentergetriebe oder ein Austausch des Exzentergetriebes können auf diese Weise vermieden werden.

In einer anderen Ausführungsform des erfindungsgemäßen Streugeräts ist de Überlastkupplung zwischen der Streuscheibenantriebswelle und dem Exzentergetriebe oder zwischen dem Exzentergetriebe und der Rührorganantriebswelle angeordnet. Durch die Platzierung der Überlastkupplung vor oder hinter dem Exzentergetriebe können unterschiedliche Kupplungstypen verwendet werden, da sich das Drehzahl- und Momentenniveau vor dem Exzentergetriebe stark von dem Drehzahl- und Momentenniveau hinter dem Exzentergetriebe unterscheidet. Die Anordnung der Überlastkupplung zwischen der Streuscheibenantriebswelle und dem Exzentergetriebe eignet sich für Kupplungstypen, welche bei vergleichsweise geringen Grenzdrehmomenten die Momentenübertragung unterbrechen. Die Anordnung der Überlastkupplung zwischen dem Exzentergetriebe und der Rührorganantriebswelle eignet sich für Kupplungstypen, welche bei vergleichsweise hohen Grenzdrehmomenten die Momentenübertragung unterbrechen. Die niedrige Drehzahl auf Abtriebsseite ist bei berührenden Kupplungen aus verschleißtechnischer Sicht vorteilhaft.

In einer weiteren bevorzugten Ausführungsform des erfindungsgemäßen Streugeräts ist die Überlastkupplung in dem Exzentergetriebe integriert. Vorzugsweise ist die Überlastkupplung innerhalb des Gehäuses des Exzentergetriebes angeordnet. Der Antriebsstrang kann durch die Integrierung der Überlastkupplung in dem Exzentergetriebe noch kompakter und platzsparender ausgeführt werden. Bei einer entsprechenden Konzipierung des Exzentergetriebes wird außerdem die Wartung vereinfacht und beschleunigt, da die zu wartende Anzahl von Funktionskomponenten durch die Integrierung der Überlastkupplung in dem Exzentergetriebe verringert wird. Es ist auch denkbar, dass das Rührorgan die Aufgab der Überlastsicherung übernimmt, oder elastisch vorformbare Rührelemente oder -finger eingesetzt werden.

Bevorzugt ist darüber hinaus ein erfindungsgemäßes Streugerät, bei welchem die Überlastkupplung als selbsttätig drehmomentschaltende Sicherheitskupplung ausgebildet ist. Vorzugsweise unterbricht die Überlastkupplung bei Überschreitung eines Grenzdrehmoments selbsttätig die Momentenübertragung und stellt die Momentenübertragung bei Unterschreitung des Grenzdrehmoments selbsttätig wieder her. Das Grenzdrehmoment der Überlastkupplung wird vorzugsweise derart ausgewählt, dass eine Beschädigung einzelner Komponenten des Antriebsstrangs vor der Unterbrechung der Momentenübertragung durch die Überlastkupplung ausgeschlossen oder zumindest äußerst unwahrscheinlich ist. Somit kann, je nach Einsatzzweck, entweder eine Überlastkupplung mit einem vergleichsweise niedrigen Grenzdrehmoment oder eine Überlastkupplung mit einem vergleichsweise hohen Grenzdrehmoment ausgewählt werden. Wird eine Überlastkupplung mit einem vergleichsweise niedrigen Grenzdrehmoment ausgewählt, können die Komponenten des Antriebsstrangs eine geringere Festigkeit ausweisen und somit kostengünstiger hergestellt werden. Gleichzeitig wird jedoch die Rührleistung des Rührorgans eingeschränkt. Wird eine Überlastkupplung mit einem vergleichsweise hohen Grenzdrehmoment ausgewählt, kann das Rührorgan eine hohe Rührleistung erbringen. Gleichzeitig müssen die Komponenten des Getriebes jedoch eine gewisse Festigkeit aufweisen, wodurch die Herstellungskosten erhöht werden.

In einer Weiterbildung des erfindungsgemäßen Streugeräts ist die Überlastkupplung als Rutschkupplung oder als Sperrkörperkupplung ausgebildet Die Überlastkupplung kann ein oder mehrere federkraftbeaufschlagte Druckelemente umfassen, welche bei Überschreitung eines Grenzdrehmoments ausgelenkt werden, wobei die Auslenkung des einen oder der mehreren federkraftbeaufschlagten Druckelemente eine Unterbrechung der Momentenübertragung zur Folge hat. Das eine oder die mehreren federkraftbeaufschlagten Druckelemente können abhängig von der Anordnung der Überlastkupplung vor dem Exzentergetriebe oder hinter dem Exzentergetriebe angeordnet oder in dem Exzentergetriebe integriert sein. Das eine oder die mehreren federkraftbeaufschlagten Druckelemente können auch in der Zykloidscheibe des Zykloidgetriebes angeordnet sein.

In einer weiteren Ausführungsform des erfindungsgemäßen Streugeräts verursacht die Überlastkupplung beim Überschreiten eines Grenzdrehmoments eine axiale Verschiebung der Rührorganantriebswelle und/oder eine Hubbewegung des Rührorgans. Vorzugsweise verursacht die Überlastkupplung bei dem auf die Überschreitung des Grenzdrehmoments folgenden Unterschreiten des Grenzdrehmoments eine axiale Verschiebung der Rührorganantriebswelle und/oder eine Hubbewegung des Rührorgans in die entgegengesetzte Richtung. Die axiale Verschiebung der Rührorganantriebswelle und/oder die Hubbewegung des Rührorgans in die entgegengesetzte Richtung können dabei unmittelbar bei der Unterschreitung des Grenzdrehmoments oder erst nach Erreichen eines bestimmten Drehwinkels der Rührorganantriebswelle erfolgen.

Weitere Einzelheiten der Erfindung sind der Figurenbeschreibung und den Zeichnungen zu entnehmen. Es zeigen
- Fig. 1: ein Ausführungsbeispiel des erfindungsgemäßen Streugeräts in einer schematischen Darstellung;
- Fig. 2: das Rührorgan des erfindungsgemäßen Streugeräts aus der Fig. 1 in einer perspektivischen Darstellung;
- Fig. 3: das Rührorgan des erfindungsgemäßen Streugeräts aus der Fig. 1 in einer Schnittdarstellung;
- Fig. 4: das Rührorgan des erfindungsgemäßen Streugeräts aus der Fig. 1 in einer weiteren Schnittdarstellung;
- Fig. 5: Teile eines Zykloidgetriebes eines erfindungsgemäßen Streugeräts in einer schematischen Darstellung; und
- Fig. 6: Teile einer Überlastkupplung eines erfindungsgemäßen Streugeräts in einer schematischen Darstellung.

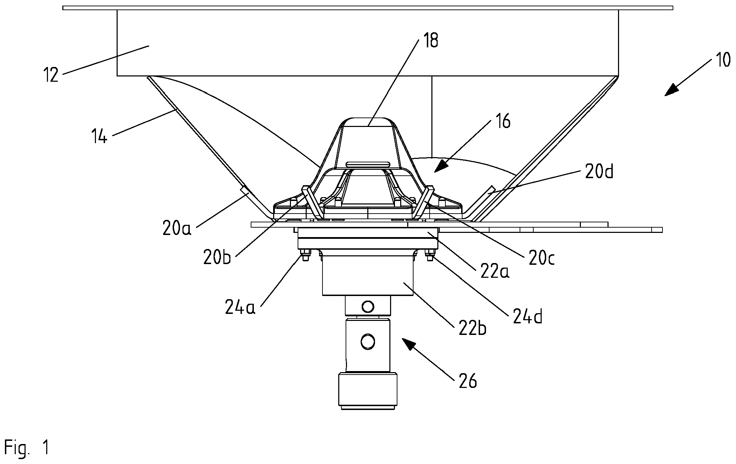

Die Fig. 1 zeigt ein Streugerät 10 zum Verteilen von Streugut mit einem Vorratsbehälter 12 für das Streugut. Der Vorratsbehälter 12 weist einen Trichter 14 auf, in welchem ein Rührorgan 16 angeordnet ist. Das Rührorgan 16 wird von einer Rührorganantriebswelle 50, welche von einem als Gehäusedeckel 18 ausgebildeten Rührkopf verdeckt wird, rotatorisch angetrieben.

Die Rotationsbewegung wird von der Rührorganantriebswelle 50 an den Gehäusedeckel 18 übertragen, wobei der Gehäusedeckel 18 die Rotationsbewegung an die Rührfinger 20a-20d überträgt. Unterhalb des Gehäusedeckels 18 und der Rührfinger 20a-20d ist ein Gehäuse 22a, 22b angeordnet, wobei die Gehäuseteile 22a, 22b mit Befestigungselementen 24a, 24d miteinander verbunden sind. Die Befestigungselemente 24a, 24d sind jeweils als Schrauben-Mutter-Kombination ausgeführt.

Eine mehrteilige Streuscheibenantriebswelle 26 ist abschnittsweise innerhalb des Gehäuseteils 22b angeordnet und über ein innerhalb des Gehäuses 22a, 22b angeordnetes Exzentergetriebe (verdeckt) mit der Rührorganantriebswelle 50 verbunden. Die Streuscheibenantriebswelle 26 ist dazu eingerichtet, eine Streuscheibe rotatorisch anzutreiben, wobei die Streuscheibe das den Vorratsbehälter 12 verlassende Streugut ausbringt. Dadurch, dass die Rührorganantriebswelle 50 und die Streuscheibenantriebswelle 26 über das Exzentergetriebe 38 miteinander verbunden sind, können die Rührorganantriebswelle 50 und die Streuscheibenantriebswelle 26 von derselben Antriebseinrichtung angetrieben werden.

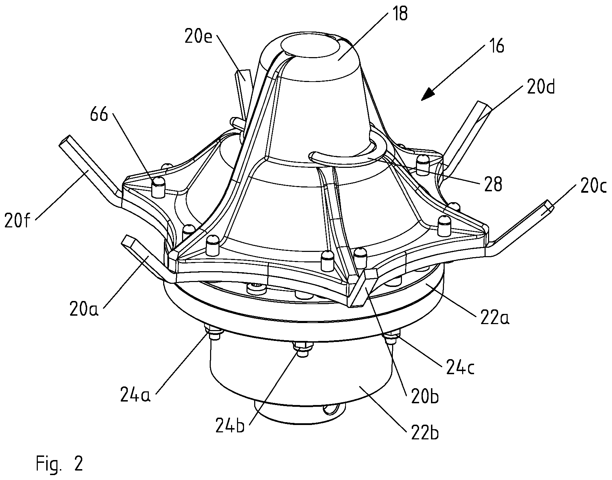

Die Fig. 2 zeigt, dass der Gehäusedeckel 18 mittels eines Sicherungssplints 28 gesichert ist. Das Rührorgan 16 weist insgesamt sechs gleichmäßig über den Umfang des Rührorgans 16 angeordnete und schräg nach oben abgewinkelte Rührfinger 20a-20f auf, wobei die Trägerplatte der Rührfinger 20a-20f mit dem Gehäusedeckel 18 über mehrere als Nieten ausgebildete Befestigungselemente 66 verbunden ist.

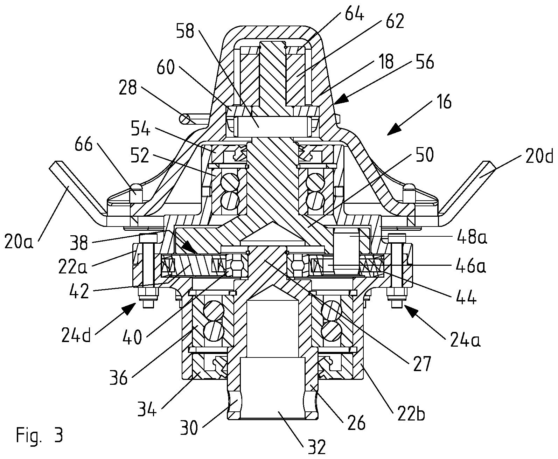

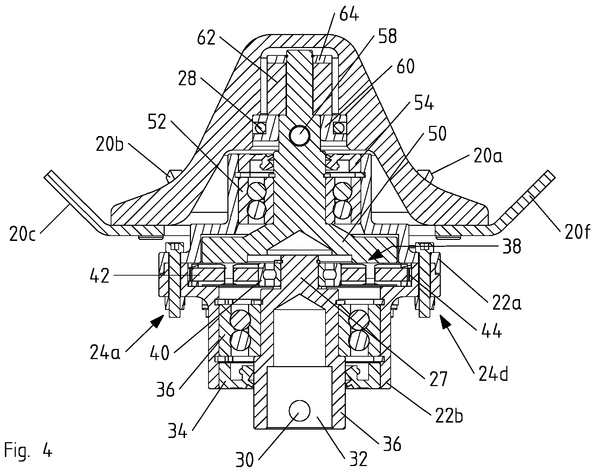

Die Fig. 3 und die Fig. 4 zeigen, dass die Streuscheibenantriebswelle 26 ein Durchgangsloch 30 und eine Hohlbohrung 32 aufweisen. Durch die Hohlbohrung 32 und das Durchgangsloch 30 kann der dargestellte Teil der Streuscheibenantriebswelle 26 mit weiteren Teilen der Streuscheibenantriebswelle 26 unter Verwendung eines Sicherungsstifts verbunden werden.

Die Streuscheibenantriebswelle 26 ist mittels einer als Radialwellendichtring ausgeführten Dichtung 34 gegenüber dem Gehäuseteil 22b abgedichtet. Zwischen der Streuscheibenantriebswelle 26 und dem Gehäuseteil 22b ist ein als zweireihiges Rillenkugellager ausgeführtes Lager 36 angeordnet. Die Rührorganantriebswelle 50 und die Streuscheibenantriebswelle 26 verlaufen jeweils in vertikaler Richtung und sind koaxial zueinander angeordnet.

Das von der gemeinsamen Antriebseinrichtung in die Streuscheibenantriebswelle 26 eingeleitete Drehmoment wird über das Exzentergetriebe 38 an die Rührorganantriebswelle 50 übertragen. Das Exzentergetriebe 38 ist ein Untersetzungsgetriebe und als zahnradfreies Getriebe, nämlich als Zykloidgetriebe, ausgebildet.

Die Streuscheibenantriebswelle 26 ist als Getriebeeingangswelle und die Rührorganantriebswelle 50 ist als Getriebeausgangswelle ausgebildet. Die Streuscheibenantriebswelle 26 weist einen Exzenterabschnitt 27 auf, welcher eine Kurvenscheibe 42 antreibt. Zwischen dem Exzenterabschnitt 27 der Streuscheibenantriebswelle 26 und der Kurvenscheibe 42 ist ein Wälzlager 40 angeordnet. Die Kurvenscheibe 42 weist mehrere Kurvenabschnitte auf, welche sich in einem feststehenden Kurvenring 44 des Gehäuseteils 22b abwälzen. Die Kurvenscheibe 42 weist mehrere auf einer Kreisbahn angeordnete Durchgangslöcher 46a-46e auf, von welchen lediglich das Durchgangsloch 46a dargestellt ist. Durch die Durchgangslöcher 46a-46e erstreckt sich jeweils ein Stift 48a-48e, wobei die Durchgangslöcher 46a-46e einen größeren Durchmesser als die Stifte 48a-48e aufweisen. Die Stifte 48a-48e, von welchen lediglich der Stift 48a dargestellt ist, sind mit der Rührorganantriebswelle 50 verbunden. Über die Stifte 48a-48e wird die Rührorganantriebswelle 50 durch die Kurvenscheibe 42 angetrieben, wobei die taumelnde Drehbewegung der Kurvenscheibe 42 durch die Anordnung und die Dimensionierung der Durchgangslöcher 46a-46e der Kurvenscheibe 42 und der Stifte 48a-48e in eine gleichförmige , koaxiale Rotationsbewegung der Rührorganantriebswelle 50 umgeformt wird. Durch die Bewegungsumformung des als Zykloidgetriebe ausgebildeten Exzentergetriebes 38 weisen die Rührorganantriebswelle 50 und die Streuscheibenantriebswelle 26 entgegengesetzte Rotationsrichtungen auf.

Zwischen der Rührorganantriebswelle 50 und dem Gehäuseteil 22a ist ein als zweireihiges Rillenkugellager ausgeführtes Lager 52 angeordnet. Die Rührorganantriebswelle 50 ist mittels einer als Radialwellendichtring ausgeführten Dichtung 54 gegenüber dem Gehäuseteil 22a abgedichtet.

Zwischen dem Rührorgan 16 und der Streuscheibenantriebswelle 26, nämlich zwischen dem Rührorgan 16 und der Rührorganantriebswelle 50, ist eine Überlastkupplung 56 angeordnet. Die Überlastkupplung 56 ist als selbsttätig drehmomentschaltende Sperrkörperkupplung ausgebildet und weist einen Stift 58 auf, wobei oberhalb des Stifts 58 ein als Klaue ausgebildetes Druckelement 60 angeordnet ist. Das Druckelement 60 überträgt die Rotationsbewegung der Rührorganantriebswelle 50 an den Gehäusedeckel 18, welcher die Rotationsbewegung weiter an die Rührfinger 20a-20f überträgt. Bei Überschreitung eines Grenzdrehmoments wird das Druckelement 60 ausgelenkt, wobei die Auslenkung eine Unterbrechung der Momentenübertragung zur Folge hat. Durch die Auslenkung des Druckelements 60 verursacht die Überlastkupplung 56 beim Überschreiten des Grenzdrehmoments eine Hubbewegung des Rührorgans 16.

Das Druckelement 60 wird durch das Federelement 62 mit einer Rückstellkraft beaufschlagt, welche der Auslenkung entgegenwirkt. Das Federelement 62 stützt sich an der Sicherungsscheibe 64 ab. Durch die Rückstellkraft des Federelements 62 wird bei dem auf die Überschreitung des Grenzdrehmoments folgenden Unterschreiten des Grenzdrehmoments eine Hubbewegung des Rührorgans in die entgegengesetzte Richtung verursacht.

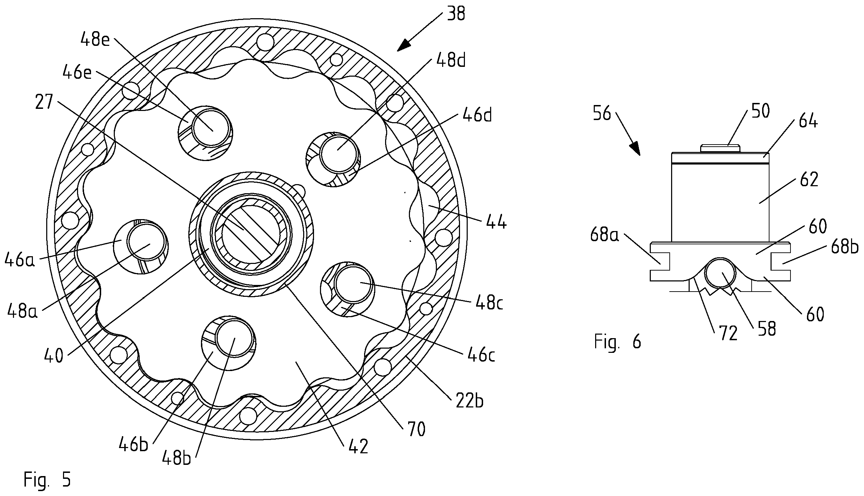

Die Fig. 5 zeigt Teile des als Zykloidgetriebe ausgebildeten Exzentergetriebes 38. Der Exzenterabschnitt 27 der Streuscheibenantriebswelle 26 erstreckt sich durch ein Durchgangsloch 70 der Kurvenscheibe 42. Innerhalb des Durchgangslochs 70 der Kurvenscheibe 42 ist ferner ein Wälzlager 40 angeordnet, wobei der Außenring des Wälzlagers 40 an der Kurvenscheibe 42 und der Innenring des Wälzlagers 40 an dem Exzenterabschnitt 27 der Streuscheibenantriebswelle 26 anliegt. Die Kurvenscheibe 42 weist insgesamt 15 außenliegende Kurvenabschnitte auf, welche sich in insgesamt 16 Kurvenabschnitten eines feststehenden Kurvenrings 44 abwälzen.

Die Kurvenscheibe 42 weist außerdem fünf auf einer Kreisbahn angeordnete Durchgangslöcher 46a-46e auf. Durch die Durchgangslöcher46a-46e erstreckt sich jeweils ein Stift 48a-48e. Die Stifte 48a-48e sind ebenfalls auf einer Kreisbahn angeordnet. Die Durchgangslöcher 46a-46e der Kurvenscheibe 42 weisen einen größeren Durchmesser als die Stifte 48a-48e auf. Die Stifte 48a-48e sind mit der Rührorganantriebswelle 50 verbunden, sodass die Rührorganantriebswelle 50 über die Stifte 48a-48e durch die Kurvenscheibe 42 angetrieben wird.

Die Kurvenscheibe 42 führt aufgrund des Antriebs durch den Exzenterabschnitt 27 der Streuscheibenantriebswelle 26 eine taumelnde Drehbewegung aus. Die taumelende Drehbewegung der Kurvenscheibe 42 wird durch die Anordnung und die Dimensionierung der Durchgangslöcher 46a-46e der Kurvenscheibe 42 und der Stifte 48a-48e in eine gleichförmige, koaxiale Rotationsbewegung der Rührorganantriebswelle 50 umgeformt.

Die Fig. 6 zeigt Teile einer Überlastkupplung 56. Die Überlastkupplung 56 weist einen Stift 58 auf, welcher sich durch ein entsprechendes Durchgangsloch in der Rührorganantriebswelle 50 erstreckt. Die seitlich von der Rührorganantriebswelle 50 angeordneten Abschnitte des Stifts 58 stehen in Kontakt mit einer Kurvenbahn 72 eines Druckelements 60. Das Druckelement 60 weist ein zentrales Durchgangsloch (verdeckt) für die Rührorganantriebswelle 50 auf. Das Druckelement 60 überträgt die Rotationsbewegung der Rührorganantriebswelle 50 an den Gehäusedeckel 18, welcher die Rotationsbewegung weiter an die Rührfinger 20a-20f überträgt. Ferner weist das Druckelement 60 zwei gegenüberliegende Ausnehmungen 68a, 68b auf, welche zur Aufnahme eines Sicherungssplints 28 eingerichtet sind. Der Sicherungssplint 28 erstreckt sich durch Durchgangslöcher in dem Gehäusedeckel 18 (siehe Fig. 2).

Bei Überschreitung eines Grenzdrehmoments wird das Druckelement 60 aufgrund der Kurvenbahn 72 nach oben ausgelenkt. Durch die Auslenkung wird der Eingriff zwischen dem Druckelement 60 und dem Stift 58 aufgelöst, wodurch eine Unterbrechung der Momentenübertragung eintritt. Zusammen mit dem Druckelement 60 wird auch der Gehäusedeckel 18 nach oben ausgelenkt, sodass eine Hubbewegung des Rührorgans 16 resultiert.

Das Druckelement 60 wird durch das als Elastomerfeder ausgebildete Federelement 62 mit einer Rückstellkraft beaufschlagt, welche der Auslenkung entgegenwirkt. Das Federelement 62 stützt sich an der Sicherungsscheibe 64 ab. Wird das Grenzdrehmoment im Folgenden wieder unterschritten, bringt die Rückstellkraft des Federelements 62 nach einer halben Umdrehung des Druckelements 60 das Druckelement 60 und den Stift 58 wieder in Eingriff, sodass eine Hubbewegung des Rührorgans 16 in die entgegengesetzte Richtung verursacht und die Momentenübertragung wieder hergestellt wird.

### Bezugszeichenliste

- 10: Streugerät
- 12: Vorratsbehälter
- 14: Trichter
- 16: Rührorgan
- 18: Gehäusedeckel
- 20a-20f: Rührfinger
- 22a, 22b: Gehäuseteile
- 24a-24d: Befestigungselemente
- 26: Streuscheibenantriebswelle
- 27: Exzenterabschnitt
- 28: Sicherungssplint
- 30: Durchgangsloch
- 32: Hohlbohrung
- 34: Dichtung
- 36: Lager
- 38: Exzentergetriebe
- 40: Lager
- 42: Kurvenscheibe
- 44: Kurvenring
- 46a-46e: Durchgangslöcher
- 48a-48e: Stifte
- 50: Rührorganantriebswelle
- 52: Lager
- 54: Dichtung
- 56: Überlastkupplung
- 58: Stift
- 60: Druckelement
- 62: Federelement
- 64: Sicherungsscheibe
- 66: Befestigungselement
- 68a, 68b: Ausnehmungen
- 70: Durchgangsloch
- 72: Kurvenbahn

## Patentansprüche

1. Streugerät (10) zum Verteilen von Streugut, mit
- einem Rührorgan (16), welches in einem Vorratsbehälter (12) für das Streugut angeordnet ist und von einer Rührorganantriebswelle (50) rotatorisch angetrieben wird; und
- einer Streuscheibe, welche dazu eingerichtet ist, das den Vorratsbehälter (12) verlassende Streugut auszubringen, wobei die Streuscheibe von einer Streuscheibenantriebswelle (26) rotatorisch angetrieben wird;
wobei die Rührorganantriebswelle (50) und die Streuscheibenantriebswelle (26) von derselben Antriebseinrichtung angetrieben werden, und die Rührorganantriebswelle (50) und die Streuscheibenantriebswelle (26) über ein Exzentergetriebe (38) miteinander verbunden sind, **dadurch gekennzeichnet, dass** das Exzentergetriebe als Zykloidgetriebe ausgebildet ist; dass die Streuscheibenantriebswelle als Getriebeeingangswelle und die Rührorganantriebswelle als Getriebeausgangswelle ausgebildet ist, und dass die Getriebeeingangswelle einen Exzenterabschnitt aufweist, welcher eine Kurvenscheibe antreibt.

2. Streugerät (10) nach Anspruch 1,
**dadurch gekennzeichnet, dass** das Exzentergetriebe (38) als zahnradfreies Getriebe ausgebildet ist.

3. Streugerät (10) nach einem der vorstehenden Ansprüche, **dadurch gekennzeichnet, dass** die Rührorganantriebswelle (50) und die Streuscheibenantriebswelle (26) parallel oder koaxial zueinander angeordnet sind.

4. Streugerät (10) nach einem der vorstehenden Ansprüche, **dadurch gekennzeichnet, dass** die Rührorganantriebswelle (50) und die Streuscheibenantriebswelle (26) entgegengesetzte Rotationsrichtungen aufweisen.

5. Streugerät (10) nach einem der vorstehenden Ansprüche, **dadurch gekennzeichnet, dass** zwischen dem Rührorgan (16) und der Streuscheibenantriebswelle (26) eine Überlastkupplung (56) angeordnet ist.

6. Streugerät (10) nach Anspruch 5, **dadurch gekennzeichnet, dass** die Überlastkupplung (56) zwischen dem Rührorgan (16) und der Rührorganantriebswelle (50) angeordnet ist.

7. Streugerät (10) nach Anspruch 5, **dadurch gekennzeichnet, dass** die Überlastkupplung (56) zwischen der Streuscheibenantriebswelle (26) und dem Exzentergetriebe (38) oder zwischen dem Exzentergetriebe (38) und der Rührorganantriebswelle (50) angeordnet ist.

8. Streugerät (10) nach Anspruch 5, **dadurch gekennzeichnet, dass** die Überlastkupplung (56) in dem Exzentergetriebe (38) integriert ist.

9. Streugerät (10) nach einem der Ansprüche 5 bis 8, **dadurch gekennzeichnet, dass** die Überlastkupplung (56) als selbsttätig drehmomentschaltende Sicherheitskupplung ausgebildet ist.

10. Streugerät (10) nach einem der Ansprüche 5 bis 9, **dadurch gekennzeichnet, dass** die Überlastkupplung (56) als Rutschkupplung oder als Sperrkörperkupplung ausgebildet ist.

11. Streugerät (10) nach einem der Ansprüche 5 bis 10, **dadurch gekennzeichnet, dass** die Überlastkupplung (56) beim Überschreiten eines Grenzdrehmoments eine axiale Verschiebung der Rührorganantriebswelle (50) und/oder eine Hubbewegung des Rührorgans verursacht.

## Claims

1. Spreading device (10) for distributing material to be spread, having
- a stirrer (16) which is arranged in a storage container (12) for the material to be spread and is driven rotationally by a stirrer drive shaft (50); and
- a spreader disc which is set up to eject the material to be spread which leaves the storage container (12), the spreader disc being driven rotationally by a spreader disc drive shaft (26);
the stirrer drive shaft (50) and the spreader disc drive shaft (26) being driven by the same drive device, and
the stirrer drive shaft (50) and the spreader disc drive shaft (26) being connected to one another via an eccentric mechanism (38), **characterized in that** the eccentric mechanism is configured as a cycloid gear mechanism;
**in that** the spreader disc drive shaft is configured as a mechanism input shaft and the stirrer drive shaft is configured as a mechanism output shaft; and
**in that** the mechanism input shaft has an eccentric section which drives a cam disc.

2. Spreading device (10) according to Claim 1, **characterized in that** the eccentric mechanism (38) is configured as a mechanism without gearwheels.

3. Spreading device (10) according to either of the preceding claims,
**characterized in that** the stirrer drive shaft (50) and the spreader disc drive shaft (26) are arranged parallel or coaxially with respect to one another.

4. Spreading device (10) according to one of the preceding claims,
**characterized in that** the stirrer drive shaft (50) and the spreader disc drive shaft (26) have opposed rotational directions.

5. Spreading device (10) according to one of the preceding claims,
**characterized in that** an overload clutch (56) is arranged between the stirrer (16) and the spreader disc drive shaft (26).

6. Spreading device (10) according to Claim 5,
**characterized in that** the overload clutch (56) is arranged between the stirrer (16) and the stirrer drive shaft (50).

7. Spreading device (10) according to Claim 5,
**characterized in that** the overload clutch (56) is arranged between the spreader disc drive shaft (26) and the eccentric mechanism (38) or between the eccentric mechanism (38) and the stirrer drive shaft (50).

8. Spreading device (10) according to Claim 5,
**characterized in that** the overload clutch (56) is integrated into the eccentric mechanism (38).

9. Spreading device (10) according to one of Claims 5 to 8,
**characterized in that** the overload clutch (56) is configured as an automatically torque-switching safety clutch.

10. Spreading device (10) according to one of Claims 5 to 9,
**characterized in that** the overload clutch (56) is configured as a slipping clutch or as a locking body clutch.

11. Spreading device (10) according to one of Claims 5 to 10,
**characterized in that** the overload clutch (56) causes an axial displacement of the stirrer drive shaft (50) and/or a lifting movement of the stirrer if a limit torque is exceeded.

## Revendications

1. Appareil d'épandage (10) destiné à épandre du matériau d'épandage, avec
- un organe d'agitation (16), qui est disposé dans un réservoir de stockage (12) pour le matériau d'épandage et qui est entraîné en rotation par un arbre d'entraînement d'organe d'agitation (50); et
- un disque d'épandage, qui est conçu pour expulser le matériau d'épandage quittant le réservoir de stockage (12), dans lequel le disque d'épandage est entraîné en rotation par un arbre d'entraînement de disque d'épandage (26);
dans lequel l'arbre d'entraînement d'organe d'agitation (50) et l'arbre d'entraînement de disque d'épandage (26) sont entraînés par le même dispositif d'entraînement, et l'arbre d'entraînement d'organe d'agitation (50) et l'arbre d'entraînement de disque d'épandage (26) sont reliés l'un à l'autre par un engrenage excentrique (38),
**caractérisé en ce que**
l'engrenage excentrique est formé par un engrenage cycloïdal;
l'arbre d'entraînement de disque d'épandage est formé par un arbre d'entrée d'engrenage et l'arbre d'entraînement d'organe d'agitation est formé par un arbre de sortie d'engrenage, et
l'arbre d'entrée d'engrenage présente une partie excentrique, qui entraîne un disque de came.

2. Appareil d'épandage (10) selon la revendication 1, **caractérisé en ce que** l'engrenage excentrique (38) est formé par un engrenage sans roue dentée.

3. Appareil d'épandage (10) selon l'une quelconque des revendications précédentes, **caractérisé en ce que** l'arbre d'entraînement d'organe d'agitation (50) et l'arbre d'entraînement de disque d'épandage (26) sont disposés de façon parallèle ou coaxiale l'un à l'autre.

4. Appareil d'épandage (10) selon l'une quelconque des revendications précédentes, **caractérisé en ce que** l'arbre d'entraînement d'organe d'agitation (50) et l'arbre d'entraînement de disque d'épandage (26) présentent des sens de rotation opposés.

5. Appareil d'épandage (10) selon l'une quelconque des revendications précédentes, **caractérisé en ce qu'**un embrayage de surcharge (56) est disposé entre l'organe d'agitation (16) et l'arbre d'entraînement de disque d'épandage (26).

6. Appareil d'épandage (10) selon la revendication 5, **caractérisé en ce que** l'embrayage de surcharge (56) est disposé entre l'organe d'agitation (16) et l'arbre d'entraînement d'organe d'agitation (50).

7. Appareil d'épandage (10) selon la revendication 5, **caractérisé en ce que** l'embrayage de surcharge (56) est disposé entre l'arbre d'entraînement de disque d'épandage (26) et l'engrenage excentrique (38) ou entre l'engrenage excentrique (38) et l'arbre d'entraînement d'organe d'agitation (50).

8. Appareil d'épandage (10) selon la revendication 5, **caractérisé en ce que** l'embrayage de surcharge (56) est intégré dans l'engrenage excentrique (38).

9. Appareil d'épandage (10) selon l'une quelconque des revendications 5 à 8, **caractérisé en ce que** l'embrayage de surcharge (56) est formé par un embrayage de sécurité commutant le couple automatiquement.

10. Appareil d'épandage (10) selon l'une quelconque des revendications 5 à 9, **caractérisé en ce que** l'embrayage de surcharge (56) est formé par un accouplement à friction ou par un accouplement à corps d'arrêt.

11. Appareil d'épandage (10) selon l'une quelconque des revendications 5 à 10, **caractérisé en ce que** l'embrayage de surcharge (56) provoque un déplacement axial de l'arbre d'entraînement d'organe d'agitation (50) et/ou un mouvement de levée de l'organe d'agitation en cas de dépassement d'un couple limite.
